Europäisches Patentamt

(19) European Patent Office

Office européen des brevets

(11) Publication number: **0 026 033**
**B1**

(12) **EUROPEAN PATENT SPECIFICATION**

(45) Date of publication of patent specification: **05.12.84**

(21) Application number: **80302572.5**

(22) Date of filing: **28.07.80**

(51) Int. Cl.³: **G 05 F 5/00, H 05 B 6/68,
H 02 H 7/122, H 02 P 13/16**

(54) **D.C. power supply.**

(30) Priority: **22.08.79 JP 106042/79**

(43) Date of publication of application:
**01.04.81 Bulletin 81/13**

(45) Publication of the grant of the patent:
**05.12.84 Bulletin 84/49**

(84) Designated Contracting States:
**BE CH DE FR GB LI NL**

(56) References cited:
**AT-B- 305 435
AT-B- 328 564
DE-B-2 035 425
FR-A-2 358 776
US-A-4 065 802**

**Patents Abstracts of Japan Vol. 1, No. 103, 13
September 1977 page 3202E77
Patents Abstracts of Japan Vol. 1, No. 7, 15
March 1977 page 108E76**

(73) Proprietor: **Hitachi, Ltd.
5-1, Marunouchi 1-chome
Chiyoda-ku Tokyo 100 (JP)**
(73) Proprietor: **Hitachi Metals, Ltd.
1-2, Marunouchi, 2-chome Chiyoda-ku
Tokyo 100 (JP)**

(72) Inventor: **Fukui, Hiroshi
1047-253, Moriyama-cho
Hitachi-shi Ibaraki-ken (JP)**
Inventor: **Hisao, Amano
336-18, Kuji-cho
Hitachi-shi Ibaraki-ken (JP)**

(74) Representative: **Ellis, Edward Lovell et al
MEWBURN ELLIS & CO. 2/3 Cursitor Street
London EC4A 1BQ (GB)**

## Description

The present invention relates to a D.C. power supply whose output voltage level or output power can be continuously varied, and particularly to a D.C. power source suitable for use in microwave ovens.

A D.C. power supply of the above referred to type can be used not only for microwave ovens but also for various kinds of apparatus which require a high voltage D.C. power source. For the sake of simplicity, the following description will be made with reference to a D.C. power supply used for driving a magnetron in a microwave oven.

The majority of microwave ovens which have been marketed use a D.C. power supply comprising a transformer for boosting the A.C. mains voltage and a double voltage rectification circuit for rectifying the boosted A.C. voltage. The D.C. power supply referred to above is relatively simple in its circuit configuration. However, it needs smoothing capacitors of large capacity to obtain a D.C. voltage which is relatively free from ripple. As a result, the D.C. power source occupies a large part of the configuration of the microwave oven in weight and volume. This fact causes a problem in the manufacture of small-sized microwave ovens.

In order to control the output power, a well known D.C. power source has a plurality of capacitors selectively connected with the double voltage rectifier. The switching-over of the connection of the capacitors will change the output power stepwise. However, it is desirable when cooking various kinds of foods having different shapes and constituents to be able to continuously control the output power over a wide range.

Another type of D.C. power supply in the form of a series inverter is disclosed in Japanese Patent Abstract No. 112,207/76 and has the basic features of the pre-characterizing clause of Claim 1.

Further, German Patent Specification No. 2,035,425 describes a power supply provided with a switching element in series with the primary winding of a transformer, which switching element is controlled by a control circuit in such a way that the duty ratio increases as the supply voltage decreases. The switching frequency however is not constant but changes with the change in duty ratio.

It is an object of the present invention to overcome partially or wholly the above referred to disadvantages.

According to the present invention there is provided a D.C. power supply comprising a main circuit including: A.C. voltage input means having a predetermined first frequency, a rectifier circuit for converting said A.C. voltage into a D.C. voltage, and a switching element having an anode, a cathode and a control electrode for chopping said D.C. voltage at a predetermined second frequency higher than said first frequency in response to a control pulse applied to said control electrode; a transformer having a primary winding and a secondary winding, said primary winding being connected to the switching element, such that a chopped current flows in one direction therethrough; and a control unit including a first control circuit for producing said control pulse for application to the control electrode of the switching element and for controlling ON-OFF operation of the switching element of said main circuit; characterized in that said control circuit comprises: first means for sensing a level of said D.C. voltage, second means for generating a constant pulse signal having said second frequency and third means for controlling a duty ratio of said pulse signal in response to the output of the first means in such a manner that the duty ratio becomes greater as the output of the first means becomes lower, and fourth means for producing a variable voltage to be applied to said third means so that the duty ratio of said pulse signal can be controlled by the variable voltage in addition to the sensed D.C. voltage level.

The present invention will now be described in greater detail by way of example with reference to the accompanying drawings, wherein:—

Figure 1 is a circuit diagram of one preferred form of a D.C. power supply;

Figure 2 is a circuit diagram of a first control circuit of a control unit shown in Figure 1;

Figure 2a shows three waveforms of signals appearing at respective portions of the circuit shown in Figure 2;

Figure 3 is a schematic diagram of a transformer for use in the D.C. power supply shown in Figure 1;

Figure 4(A) to 4(C) show waveforms of an input to and an output from the D.C. power supply shown in Figure 1;

Figure 5 is a graph of voltage plotted to a base of phase angle showing changes in the duty ratio of a control pulse as the phase angle of the input voltage changes; and

Figure 6 is a circuit diagram of a rectifier for use in the D.C. power supply shown in Figure 1.

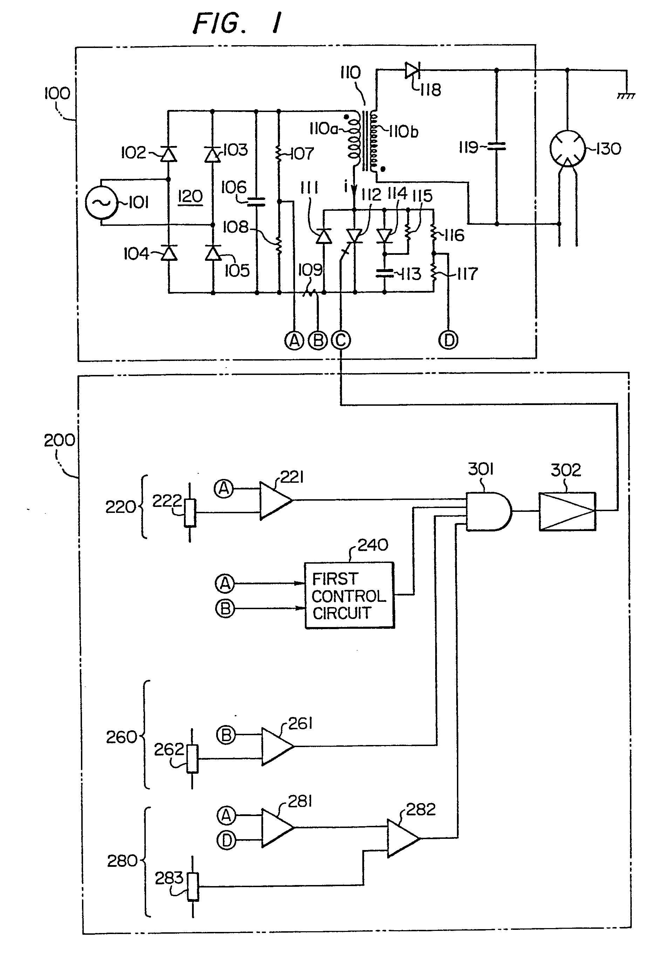

Referring first to Figure 1, the D.C. power supply comprises a main circuit 100 and a control unit 200.

The functions of the main circuit 100 are firstly to perform a full-wave rectification of the A.C. mains supply; secondly to produce a high frequency voltage by chopping the rectified voltage, and thirdly to produce a D.C. voltage by smoothing the high frequency voltage.

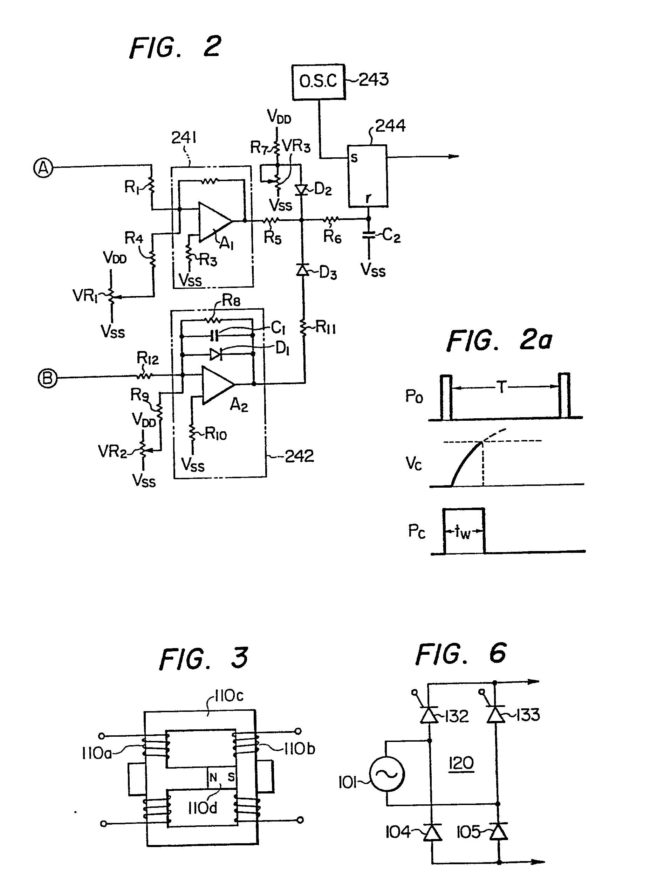

An A.C. voltage of 100 volts and 50 Hz (for Europe) or 60 Hz (for U.S.A.) is applied from a power source 101 to a full-wave rectification circuit 120 comprising diodes 102, 103, 104 and 105. Across the output terminals of the full-wave rectification circuit 120 a primary winding 110a of a transformer 110 and an anode-cathode path of a switching element 112 are connected in series. The switching element 112 is required to have a large capacity and a large forward blocking voltage. In order to meet this requirement, it is desirable to use a gate turn-off thyristor (hereinafter referred to as GTO thyristor) as the switching element 112. The forward blocking voltage and the controllable current of the GTO thyristor are about 600 V and 60 A respectively. The switching element 112 is supplied at its control electrode with a relatively high frequency pulse from a control circuit 200 to be described later. The frequency of the control pulse is selected to be 20 KHz. As shown in Figure 3 the transformer 110 comprises a magnetic core 110c, a permanent magnet 110d placed within the magnetic path of the core 110c to provide a predetermined magnetic bias, and a primary winding 110a and a secondary winding 110b wound on the magnetic core 110c. Normally, a transformer is supplied with alternating current so that a magnetic characteristic curve of the transformer extending both in the positive and negative regions can be effectively utilized. On the other hand, the transformer 110 of Figure 1 is applied with a D.C. voltage. In order to utilize fully the range of the characteristic curve, the magnetic core of the transformer is provided with a predetermined magnetic bias as mentioned above. By using the configuration shown in Figure 3, it becomes possible to reduce the size of the transformer to as much as one half the size of a conventional transformer.

A capacitor 106 is connected across the output terminals of the rectifier circuit 120. It should be noted that the capacitor 106 is connected not to smooth the rectified voltage but to decrease the impedance of the A.C. mains supply voltage 101 which is viewed from the side of the switching element 112. As described above, since the switching element 112 is driven by the control pulse of 20 KHz, a voltage of the same frequency is developed across the anode-cathode path of the switching element 112. The reactance of the A.C. mains supply voltage 101 becomes about four hundred times at a frequency of 20 KHz as compared to that at 50 Hz or 60 Hz. Accordingly, the high frequency power developed across the anode-cathode path of the switching element 112 can not be effectively transmitted through the transformer 110 to the magnetron 130. It is, therefore necessary to reduce the impedance as viewed from the switching element 112 to the power source 101. The capacitor 106 is selected to have a capacitance of several microfarads which is very small as compared with that of usual smoothing capacitors. Two resistors 107 and 108 are connected in series across both terminals of the capacitor 106. The junction point between the resistors 107 and 108 is connected with a terminal Ⓐ. These resistors 107 and 108 are used to detect the voltage developed across the series circuit comprising the primary winding 110a of the transformer 110 and the switching element 112. On the other hand, the current flowing through the series circuit of the transformer 110 and the switching element 112 is detected by means of a sensor 109 such as a shunt and supplied through a terminal Ⓑ to the control circuit 200.

A diode 111 is connected across the anode-cathode path of the switching element 112. Further, a diode 114 and a capacitor 113 are connected in series across the anode-cathode path of the switching element 112. A resistor 115 is connected across the diode 114. The diode 114, resistor 115 and capacitor 113 form a snapper circuit which functions to protect the switching element 112 against high voltage transients which will occur at the time when the switching element 112 turns off. When the switching element 112 turns off the anode voltage v increases abruptly. If the amount of

$$\frac{dv}{dt}$$

(where t indicates time) is over a predetermined value, then the switching element 112 may be destroyed. In order to decrease the value of

$$\frac{dv}{dt}$$

this arrangement provides for a current flow passing for a while through the diode 114 and the capacitor 113 at the time the switching element 112 turns off. The charge stored in the capacitor 113 is discharged through the resistor 115 when the switching element 112 turns on.

A series circuit comprising two resistors 116 and 117 are connected in parallel with the anode-cathode path of the switching element 112. The junction point between the resistors 116 and 117 is connected to a terminal Ⓓ These resistors 116 and 117 are used to detect the voltage developed across the switching element 112. The voltage across the secondary winding 110b of the transformer 110 is applied through a diode 118 to the magnetron 130 of the microwave oven. A capacitor 119 functions to smooth the high frequency voltage applied to the magnetron 130. In this embodiment, the capacitor 119 is selected to have a capacitance of about 0.1 $\mu$F, and the electric power and the voltage applied to the magnetron 130 are designed to be 1 kW and 4 kV respectively.

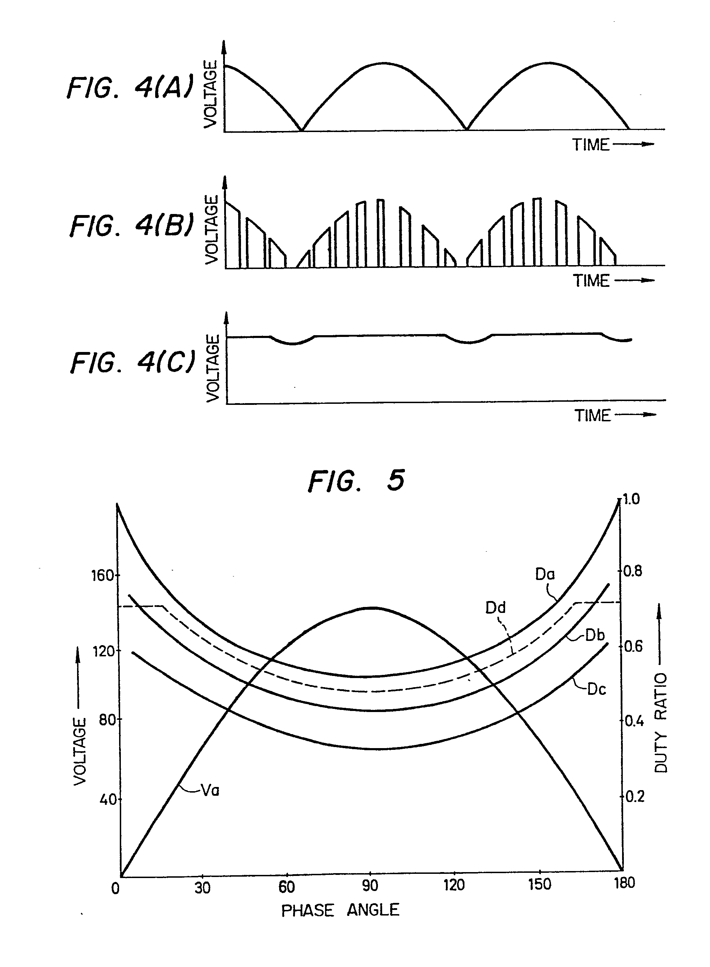

The operation of the main circuit 100 will now be described in greater detail. The A.C. mains voltage supplied from the source 101 is rectified by means of the full-wave rectification circuit 120. As a result a voltage appears across the capacitor 106 as shown in Figure 4(A). This voltage is chopped at a frequency of 20 KHz by means of the switching element 112. The duty ratio of the chopping control pulse is made large

**0 026 033**

when the magnitude of the rectified voltage is low while the duty ratio is made small when the magnitude of the voltage is high. As a result of the chopping operation a voltage appears at the anode of the switching element 112 as shown in the waveform of Figure 4(B). When the switching element 112 is in conductive state, the exciting current of the transformer 110 increases. Across the secondary winding 110$b$ of the transformer 110 a voltage is developed in the reverse direction so that the diode 118 is reverse biased and cuts-off any current flow. Therefore the secondary circuit of the transformer 110 is effectively open-circuited.

When the switching element 112 turns off, the primary circuit of the transformer 110 becomes open-circuited, during which period the diode 118 is rendered conductive and the energy stored in the secondary winding of the transformer 110 is applied to the magnetron 130. The waveform of the voltage applied to the magnetron 130 is as shown in Figure 4(C).

The control unit 200 functions to control an ON-OFF operation of the switching element 112 of the main circuit 100. This control unit 200 includes a first control circuit 240, a second control circuit 220, a third control circuit 260 and a fourth control circuit 280.

The first control circuit 240 functions to vary the duty ratio of the control pulse in accordance with the rectified voltage level and the current flowing through the switching element 112. The second control circuit 220 is provided to limit the period of time during which the switching element 112 performs ON-OFF operation, in accordance with the voltage of the rectified voltage level. This circuit 220 can be omitted depending upon the manner of control of the duty ratio. The third control circuit 260 functions to render the switching element 112 cut off irrespective of the state of the output control pulse from the first control circuit 240 when the current through the transformer 110 and the switching element 112 has exceeded a predetermined value. The fourth control circuit 280 is provided to render the switching element 112 cut off irrespective of the state of output control pulse from the first control circuit 240 when the applied voltage to the magnetron 130 or the switching element 112 has exceeded a predetermined value.

The first control circuit 240 can perform four kinds of functions. A first function is to vary the duty ratio of the control pulse applied to the switching element 112 in response to the instantaneous voltage level of the A.C. mains power source. In order to obtain an output voltage having as flat a level as possible from the A.C. mains voltage, it is necessary to change the duty ratio of the control pulse in such a manner that the chopping operation of the switching element can be performed in response to the instantaneous voltage level of the A.C. mains voltage as shown in Figure 4(B). For this purpose, the first control circuit 240 described later in detail controls the duty ratio of the control pulse as shown by a curve Da in Figure 5. In this figure, the duty ratio of the control pulse gradually decreases as the level of the A.C. mains voltage Va increases from a phase angle of 0° to a phase angle of 90°. Further, the duty ratio gradually increases as the level of the voltage Va decreases from phase angle of 90° to a phase angle of 180°.

A second function of the first control circuit 240 is to control the duty ratio of the control pulse such that the characteristic curve of the duty ratio can be shifted in parallel as shown by curves Da, Db and Dc in Figure 5 by changing the value of resistance of a variable resistor. When the duty ratio of the control pulse is varied as shown by a characteristic curve Db. the average duty ratio over one cycle of the voltage becomes less than when it is varied as shown by the curve Da. As a result the electric power applied to the magnetron 130 can be reduced. The power can be further reduced when the duty ratio of the control pulse is varied in accordance with the characteristic curve Dc. Accordingly the second function serves to continuously control the electric power supplied to the load.

A third function of the first control circuit 240 is to fix the duty ratio of the control pulse as shown at Vd in Figure 5 when the voltage level Va of the A.C. mains voltage is below a predetermined value. Since the change in duty ratio results in very small change in the voltage and power supplied to the load, the effect of the duty ratio control is small within the range of low voltage level Va. Of course, the duty ratio control at fixed value can bring more stable and simpler operation than the control of the variable duty ratio.

A fourth function of the first control circuit 240 is to control the duty ratio of the control pulse in response to the current flow through the transformer 110 and the switching element 112 when the current exceeds a predetermined value. Upon the detection of an excess current, the duty ratio of the control pulse is restricted in accordance with the detected current, thereby to reduce the current flow of the main circuit 100 and prevent the saturation of the transformer 110 as well as the switching element 112 from being broken down.

Referring to Figure 2, the first control circuit 240 which performs the functions mentioned above comprises a high frequency pulse generator 243, a multivibrator 244 which is set by the high frequency pulse and circuit means for producing a reset signal supplied to the multivibrator 244. The generator 243 generates pulses Po of frequency which is higher than that of the A.C. mains voltage source 101. This frequency is preferably selected to be 20 KHz. The high frequency pulses are applied to a set terminal of the multivibrator 244.

The voltage appearing at the terminal Ⓐ of the main circuit 100 is applied to a linear amplifier 241 through a resistor R1. The linear amplifier 241 comprises an amplifier A1 and resistors R2 and R3. The output of the amplifier 241 is applied through resistors R5 and R6 to a capacitor C2. When the voltage Vc across the capacitor C2 reaches a predetermined level, the multivibrator 244 is reset. As a result, the multivibrator 244 produces an output pulse Pc as shown in Figure 2a. The higher the input voltage at the terminal Ⓐ, the more promptly the voltage Vc across the capacitor C2 reaches a predetermined level so that the width tw of the pulse Pc becomes narrow. In other words, the duty ratio (tw/T) of the output pulse Pc becomes small as the level of the A.C. mains voltage becomes high, therefore the first function mentioned above can be achieved.

A voltage which appears at the top of a potentiometer VR1 which is connected across D.C. voltage sources $V_{ss}$ and $V_{DD}$ is superimposed on the voltage at the terminal Ⓐ through a resistor R4 and the resultant voltage is applied to a linear amplifier 241. This configuration serves to vary the bias voltage applied to the amplifier 241. The potentiometer VR1 is used for two purposes. One is to select the current flowing through a primary winding 110a of the transformer 110 and the switching element 112 at an allowable maximum value which is determined from the characteristics of those elements mentioned above, thereby to utilize effectively the capability of the elements.

If the current through the primary winding 110a of the transformer 110, the cut-off current through the switching element 112 and the average current therethrough are denoted as $I_{L1}$, $I_{off}$ and $I_{av}$ respectively, the following relationships must be satisfied.

$$\left.\begin{array}{l} I_{L1} \leqq I_{L1m} \\ I_{off} \leqq I_{offm} \\ I_{av} \leqq I_{avm} \end{array}\right\} \qquad (1)$$

where

$I_{L1m}$: saturation exciting current of the transformer 110

$I_{offm}$: controllable maximum current of the switching element

$I_{avm}$: rated average current of the switching element 112

The current $i$ flowing through the main circuit 100 can be set at the maximum value which meets all the relationships expressed as the equation (1), by the adjustment of the top of the potentiometer VR1.

The other purpose for using the potentiometer VR1 is to perform the second function referred to above, namely to continuously vary the electric power supplied to the magnetron. By adjusting the bias voltage applied to the linear amplifier 241, the duty ratio of the control pulse Pc can be varied. As a result, the characteristic curve of the duty ratio to the A.C. mains voltage may be shifted in parallel, for example from Da to Db and from Db to Dc as shown in Figure 5. It will be easily understood that such parallel shift of the characteristic curve brings about changes in the output power supplied to the magnetron. A resistor R7 and a potentiometer VR3 are connected in series across D.C. voltage sources $V_{DD}$ and $V_{ss}$. The voltage across the potentiometer VR3 is applied through a diode D2 to the connecting part between resistors R5 and R6. The potentiometer VR3 is used for achieving the third function referred to above. When the output voltage of the amplifier 241 is greater than the voltage determined by means of the variable resistor VR3, the output voltage is applied across the capacitor C2. On the other hand, the D.C. voltage determined by means of the potentiometer VR3 is greater than the output voltage of the amplifier 241, the D.C. voltage is applied through the diode D2 to the capacitor C2. In the latter case, the period of time from the timing when the multivibrator 244 has been set to the timing when it has been reset is fixed so that the duty ratio tw/T of the control pulse is also fixed.

The current flow $i$ of the main current 100, detected by the shunt 109 is applied through a resistor R12 to a linear amplifier 242 which comprises an amplifier A2, a diode D1 a capacitor C1 and resistors R8, R10 and generates an output voltage in proportion to an input current. The output voltage from the linear amplifier 242 is applied through a resistor R11 and a diode D3 to the junction point between the resistors R5 and R6. A bias voltage is delivered from a potentiometer VR2 connected between D.C. voltage sources $V_{DD}$ and $V_{ss}$ and then applied to the linear amplifier 242 through a resistor R9. The output voltage of the amplifier 242 is used for performing the fourth function referred to above. That is to say when the current flow detected by the shunt 109 exceeds the predetermined value, the output voltage of the linear amplifier 242 becomes greater than that of the amplifier 241 and is applied across the capacitor C2. As a result, the pulse width of the control pulse Pc is reduced in response to the detected current value irrespective of the A.C. mains supply.

The output pulse Pc of the multivibrator 244 is applied as the control pulse to the switching element 112 of the main circuit through an AND gate 301 and an amplifier 302 as shown in Figure 1.

Experiments have shown that the efficiency of the main circuit 100 is over 80% when the voltage of the A.C. mains voltage source 101 becomes more than 60 V, while it decreases abruptly when the voltage is below 60 V. This is because when the voltage level of the A.C. mains voltage source 101 is low, the duty ratio control is performed in such a manner that the average control through the switching element 112 is increased to maintain the output power constant. As a result, power losses of circuit elements such as the switching element 112 are also increased. In order to operate the D.C. power supply always at a high efficiency, it is desirable to stop the chopping operation of the switching element 112 when the voltage level of the A.C. mains voltage source 101 is lower than a predetermined value. The second control circuit 220 serves to perform the chopping operation of the switching element 112 only when the voltage level exceeds the predetermined value. The voltage synchronized in phase with the A.C. mains voltage source 101 is detected at the terminal Ⓐ and is applied to one of the inputs of a comparator 221. A constant voltage set by means of a potentiometer 222 is applied to the other input of the comparator 221. The comparator 221 produces a logical "1" when the A.C. mains voltage level exceeds the set value and produces a logical "0" when it is below the set value. Since the output of the comparator 221 is applied to the AND gate 301 the gate 301 functions to stop the transmission of the control pulse from the first control circuit 240 to the main circuit 100 during the period of time during which the voltage level of the A.C. voltage source 101 is lower than the predetermined value. Accordingly, during this period of time, the switching element 112 is rendered in the cut-off state. Although the apparatus of the present invention can be operated without the second control circuit 220, it is desirable to provide this circuit 220 in order to achieve a high efficiency of the main circuit 100.

As previously mentioned, when an excess current is detected as flowing through the main circuit 100, the first control circuit 240 controls the duty ratio of the control pulse to become small so that the switching element 112 can be protected against damage. However, in the case where the current flow $i$ through the main circuit 100 exceeds a predetermined value, the duty ratio control will not be enough for the protection of the circuit elements. In this case, it is desirable to stop the chopping operation of the switching element 112. The third control circuit 260 is provided in order to meet this requirement. The current flow $i$ detected by means of the shunt 109 is applied through the terminal Ⓑ to one input of a comparator 261. A constant current which is produced by a current value setting device 262 is applied to the other input of the comparator 261. The comparator 261 generates a logical "1" only when the detected current $i$ is less than the set constant value, otherwise it produces a logical "0". Accordingly, when an excess current is detected to flow through the main circuit 100, the comparator 261 produces a logical "0" which serves to close the AND gate 301 thereby to stop the chopping operation of the switching element 112.

The magnetron used for the microwave oven will begin a normal oscillation when the voltage applied to the anode thereof reaches predetermined level, for example 3.5 kV. In the case where the input voltage becomes greater than a certain value, 5.1 kV for example, or the anode voltage is applied when the preheating of the filament is insufficient, an abnormal oscillation called a "run-away" will occur. When the abnormal oscillation occurs, a high voltage is induced which is as high as several times the normal operational voltage and thereby circuit elements such as the magnetron 130, the high voltage diode 118, the transformer 110 and the switching element 112 are liable to be damaged. The fourth control circuit 280 is provided to prevent these elements being damaged. Since it is not easy to directly detect the high voltage applied to the magnetron 130, the primary voltage of the transformer 110 is detected. At the terminal Ⓐ, a voltage appears which corresponds to the sum of the primary voltage of the transformer 110 and the voltage across the switching element 112. On the other hand, the voltage proportional to that across the switching element 112 appears at the terminal Ⓓ. A differential amplifier 281 is provided to obtain the difference between the voltages at the terminal Ⓐ and the terminal Ⓓ, which corresponds to the primary voltage of the transformer 110. A potentiometer 283 is provided to produce a voltage to be compared with the detected primary voltage of the transformer 110, which corresponds to a predetermined level of the load voltage. A comparator 282 is supplied with both the output voltage of the differential amplifier 281 and the set value of the potentiometer 283 to produce a logical "1" when the former is less than the latter and generate a logical "0" when the former is greater than the latter.

In the case where the load voltage becomes abnormally high, so that the primary voltage of the transformer 110 becomes greater than the set value of the potentiometer 283, the comparator 282 produces a logical "0" which functions to close the AND gate 301. As a result, the gate 301 inhibits the transmission of the control pulse from the first control circuit 240 to the main circuit 100. Therefore the switching element 112 is rendered cut-off so that the voltage applied to the magnetron 130 can be reduced.

The fourth control circuit 280 is used also for preventing the switching element 112 from being damaged. When the rated forward blocking voltage of the switching element 112 and the voltage thereacross are expressed as $V_{b1m}$ and $V_{b1}$ respectively, it is necessary to meet the following relationship.

$$V_{b1} \leqq V_{b1m} \qquad (2)$$

For this requirement, the potentiometer 283 is preliminarily set to produce an appropriate voltage corresponding to $V_{b1m}$. When the detected voltage becomes greater than the set value $V_{b1m}$, the comparator 282 produces a logical "0" so as to close the AND gate 301. Therefore it is capable of preventing the switching element 112 from being broken down.

Referring now to a modified form of the apparatus shown in Figure 6, thyristors 132 and 133 can replace the diodes 102 and 103, of the rectification circuit 120 shown in Figure 1. In this case, an average voltage delivered from the diode bridge can be easily varied by controlling the firing angles of the thyristors 132 and 133.

## Claims

1. A D.C. power supply comprising a main circuit (100) including: A.C. voltage input means (101) having a predetermined first frequency, a rectifier circuit (120) for converting said A.C. voltage into a D.C. voltage, and a switching element (112) having an anode, a cathode and a control electrode for chopping said D.C. voltage at a predetermined second frequency higher than said first frequency in response to a control pulse applied to said control electrode; a transformer (110) having a primary winding (110a) and a secondary winding (110b), said primary winding being connected to the switching element (112), such that a chopped current flows in one direction therethrough; and a control unit (200) including a first control circuit (240) for producing said control pulse for application to the control electrode of the switching element (112) and for controlling ON-OFF operation of the switching element (112) of said main circuit; characterized in that said control circuit (240) comprises first means (107, 108) for sensing the level of said D.C. voltage, second means (243) for generating a constant frequency pulse signal having said second frequency, third means ($R_1$, 241, $R_5$, $R_6$, 244 and $C_2$) for controlling the duty ratio of said pulse signal in response to the output of the first means (107, 108) in such a manner that the duty ratio becomes greater as the output of the first means becomes lower, and fourth means ($VR_1$) for producing a variable voltage to be applied to said third means (241) so that the duty ratio of said pulse signal can be controlled by the variable voltage in addition to the sensed D.C. voltage level.

2. A D.C. power supply according to Claim 1, characterized in that said first control circuit (240) further comprises fifth means ($VR_3$) for generating a predetermined constant voltage and means ($D_2$) for applying the constant voltage in place of the output of the third means when the constant voltage becomes greater than the output of the first means, so that the duty ratio of the pulse signal becomes constant.

3. A D.C. power supply according to Claim 1, characterized in that the first control circuit (240) further comprises means (109) for detecting a current flow passing through the main circuit, means (242) for producing a voltage corresponding to the detected current flow and means ($D_3$) for applying the voltage corresponding to the detected current flow in place of the output of the third means when the voltage corresponding to the detected current flow becomes greater than the output of the first means, so that the duty ratio of the pulse signal may vary in accordance with the current flow of the main circuit.

4. A D.C. power supply according to Claim 1, characterized in that the control unit (200) further comprises a second control circuit (220) including means (222) for producing a predetermined constant voltage, means (221) for comparing the sensed D.C. voltage obtained by the first means (107, 108) with the constant voltage to produce an output when the sensed D.C. voltage exceeds the constant voltage and gate means (301) connected to receive outputs of the comparison means (221) and the first control circuit (240), for inhibiting the application of the output of the first control circuit to the switching element (112) in response to the output of the comparison means (221).

5. A D.C. power supply according to Claim 1, characterized in that the control unit (200) further comprises a third control circuit (260) including means (262) for producing a predetermined constant current, means (109) for detecting a current flow passing through the main circuit (100), means (261) for comparing the detected current with the predetermined constant current to generate an output when the detected current becomes greater in level than the predetermined constant current, and gate means (301) connected to receive the outputs of the comparison means (261) and the first control circuit (240), for inhibiting the application of the output of the first control circuit to the switching element (112) in response to the output of the comparison means (261).

6. A D.C. power supply according to Claim 1, characterized in that the control unit 8200) further comprises a fourth control circuit (280) including means (281) for detecting a voltage developed across the primary winding of the transformer (110) or a voltage across the switching element (112), means (283) for producing a predetermined voltage, means (282) for comparing the detected voltage with the predetermined voltage to produce an output when one becomes greater than the other and gate means (301) connected to receive outputs of the comparison means (282) and the first control circuit (240), for inhibiting the application of the output of the first control circuit to the switching element (112) in response to the output of the comparison (282).

7. A D.C. power supply according to any one of the preceding claims, characterised in that the rectifier circuit comprises a diode bridge having two branches, each branch comprising a diode (104 or 105) and a thyristor (132 or 133).

8. A D.C. power supply according to any one of the preceding claims, characterised in that a capacitor 8106) is connected across the rectifier circuit (120), said capacitor having a value of capacitance which exhibits a low impedance at the second frequency.

9. A D.C. power supply according to any one of the preceding claims, characterized in that the switching element comprises a gate turn-off thyristor (112).

10. A D.C. power supply according to any one of the preceding claims, characterized in that the transformer (110) comprises a magnetic core (110c) defining a magnetic path on which the primary winding (110a) and secondary winding (110b) are wound, said magnetic path (110c) including a permanent magnet (110d) to provide a predetermined magnetic bias with respect to magnetic flux due to a current flowing through the primary winding (110a).

## Patentansprüche

1. Gleichstrom-Energieversorgung mit einem Hauptschaltkreis (100), der eine Eingabevorrichtung (101) für eine Wechselspannung mit einer vorgegebenen ersten Frequenz, eine Gleichrichterschaltung (120) zum Umwandeln dieser Wechselspannung in eine Gleichspannung und ein Schaltelement (112) aufweist, das eine Anode, eine Kathode und eine Steuerelektrode aufweist, um die Gleichspannung mit einer vorgegebenen zweiten Frequenz, die höher als die erste Frequenz ist, nach Maßgabe eines an die Steuerelektrode angelegten Steuerimpulses zu zerhacken, einem Transformator 110) mit einer Primärwicklung (110a) und einer Sekundärwicklung (110b), wobei die beiden Wicklungen mit dem Schaltelement (112) so verbunden sind, daß ein zerhackter Strom in eine Richtung hindurchfließt, und mit einer Steuereinheit (200), die eine erste Steuerschaltung (240) aufweist, um den Steuerimpuls zum Anlegen an die Steuerelektrode des Schaltelementes (112) zu erzeugen und um den EIN-AUS-Betrieb des Schaltelementes (112) des Hauptschaltkreises zu steuern, dadurch gekennzeichnet, daß die Steuerschaltung (240) aufweist: eine erste Einrichtung (107, 108), um den Pegel der Gleichspannung abzutasten, eine zweite Vorrichtung (243), um ein Impulssignal konstanter Frequenz, welches die zweite Frequenz besitzt, zu erzeugen, eine dritte Einrichtung (R₁, 241, R₅, R₆, und C₂), um das Tastverhältnis dieses Impulssignals entsprechend dem Ausgang der ersten Einrichtung (107, 108) so zu steuern, daß das Tastverhältnis mit abnehmendem Ausgang der ersten Einrichtung größer wird, und eine vierte Einrichtung (VR₁) zum Erzeugen einer veränderlichen, an die dritte Einrichtung (241) anzulegende Spannung derart, daß das Tastverhältnis des Impulssignals durch die veränderliche Spannung zusätzlich zu dem abgetasteten Gleichspannungspegel gesteuert werden kann.

2. Gleichstrom-Energieversorgung nach Anspruch 1, dadurch gekennzeichnet, daß die erste Steuerschaltung (240) weiterhin eine fünfte Einrichtung (VR₃) zum Erzeugen einer vorgegebenen konstanten Spannung sowie eine Einrichtung (D₂) aufweist, um die konstante Spannung anstelle des Ausgangs der dritten Einrichtung anzulegen, wenn die konstante Spannung größer als der Ausgang der ersten Einrichtung wird, so daß das Tastverhältnis des Impulssignales konstant wird.

3. Gleichstrom-Energieversorgung nach Anspruch 1, dadurch gekennzeichnet, daß die erste Steuerschaltung (240) weiter eine Einrichtung (109) zum Feststellen eines durch den Hauptstromkreis laufenden Stromflusses aufweist, ferner eine Einrichtung (242), um eine dem festgestellten Stromfluß entsprechende Spannung zu erzeugen, und eine Einrichtung (D₃) aufweist, um die dem festgestellten Stromfluß entsprechende Spannung anstelle des Ausgangs der dritten Einrichtung zuzuführen, wenn die dem festgestellten Stromfluß entsprechende Spannung größer als der Ausgang der ersten Einrichtung wird, so daß das Tastverhältnis des Impulssignales sich entsprechend dem Stromfluß durch den Hauptschaltkreis ändern kann.

4. Gleichstrom-Energieversorgung nach Anspruch 1, dadurch gekennzeichnet, daß die Steuereinheit (200) weiterhin eine zweite Steuerschaltung (220) aufweist, die eine Einrichtung (222) zum Erzeugen einer vorgegebenen konstanten Spannung enthält, eine Einrichtung (221) aufweist, um die abgetastete, von der ersten Einrichtung (107, 108) erhaltene Gleichspannung mit der konstanten Spannung zu vergleichen und ein Ausgangssignal zu erzeugen, wenn die abgetastete Gleichspannung die konstante Spannung übersteigt, und eine Gate-Einrichtung (301) aufweist, die so geschaltet ist, daß sie die Ausgangssignale der Vergleichseinrichtung (221) und der ersten Steuerschaltung (240) empfängt um das Anlegen des Ausgangs der ersten Steuerschaltung an das Schaltelement (112) nach Maßgabe des Ausgangs der Vergleichseinrichtung (221) zu verhindern.

5. Gleichstrom-Energieversorgung nach Anspruch 1, dadurch gekennzeichnet, daß die Steuereinheit (200) weiterhin aufweist: eine dritte Steuerschaltung (260), die eine Einrichtung (262) zum Erzeugen eines vorgegebenen konstanten Stromes enthält, eine Einrichtung (109) zum Feststellen eines durch den Hauptschaltkreis (100) laufenden Stromflusses, eine Einrichtung (261) zum Vergleichen des festgestellten Stromes mit dem vorgegebenen konstanten Strom, um ein Ausgangssignal zu erzeugen, wenn der festegestellte Strom im Pegel größer als der vorgegebene Strom, wird, und eine Einrichtung (301), die so geschaltet ist, daß sie die Ausgangssignale der Vergleichseinrichtung (261) und der ersten Steuerschaltung (240) empfängt um das Anlegen des Ausganges der ersten Steuerschaltung an das Schaltelement nach Maßgabe des Ausganges der Vergleichseinrichtung (261) zu verhindern.

6. Gleichstrom-Energieversorgung nach Anspruch 1, dadurch gekennzeichnet, daß die Steuereinheit (200) ferner aufweist: eine vierte Steuerschaltung (280), die eine Einrichtung (281) zum Feststellen eine über die Primärwicklung des Transformators (110) abfallenden Spannung oder einer über das Schaltelement (112) abfallenden Spannung enthält, eine Einrichtung (283) zum Erzeugen eine vorgegebenen Spannung, eine Einrichtung (282) zum Vergleichen der festgestellten Spannung mit eine vorgegebenen Spannung, um ein Ausgangssignal zu erzeugen, wenn eine von diesen beiden gröber als die andere wird, und eine Gate-Einrichtung (301), die so geschaltet ist, daß sie die Ausgangssignale der Vergleichseinrichtung (282) und der ersten Steuerschaltung (240) empfängt um das Anlegen des Ausgangssignals der ersten Steuerschaltung an das Schaltelement (112) nach Maßgabe des Ausgangs der Vergleicheinrichtung (282) zu verhindern.

7. Gleichstrom-Energieversorgung nach einem der vorangehenden Ansprüche, dadurch gekennzeichnet, daß die Gleichrichterschaltung eine Diodenbrücke mit zweit Zweigen aufweist, wobei jeder Zweig eine Diode (104 oder 105) und einen Thyristor (132 oder 133) aufweist.

8. Gleichstrom-Energieversorgung nach einem der vorangehenden Ansprüche, dadurch gekennzeichnet, daß ein Kondensator (106) über die Gleichrichterschaltung (120) gelegt ist, wobei der Kondensator einen Kapazitätswert besitzt, der bei der zweiten Frequenz eine niedrige Impedanz zeigt.

9. Gleichstrom-Energieversorgung nach einem der vorangehenden Ansprüche, dadurch gekennzeichnet, daß das Schaltelement einen über das Gate abschaltbaren Thyristor (112) (GTO-Thyristor) aufweist.

10. Gleichstrom-Energieversorgung nach einem der vorangehenden Ansprüche, dadurch gekennzeichnet, daß der Transformator (110) einen Magnetkern (110c) aufweist, der einen magnetischen Weg festlegt und auf den die Primärwicklung (110a) und die Sekundärwicklung (110b) aufgewickelt sind, wobei der magnetische Weg (110c) einen permanenten Magneten (110d) enthält, um eine vorgegebene Vormagnetisierung bezüglich des aufgrund eines durch die Primärwicklung (110a) hervorgerufenen Magnetflusses zu liefern.

## Revendications

1. Alimentation en courant continu comprenant un circuit principal (100) comportant: un moyen d'entrée de tension alternative (101) ayant une première fréquence prédéterminée, un circuit redresseur (120) pour convertir ladite tension alternative en une tension continue et un élément de commutation (112) ayant une anode, une cathode et une électrode de commande pour hacher ladite tension continue à une second fréquence prédéterminée supérieure à ladite première fréquence en réponse à une impulsion de commande appliquée à ladite électrode de commande; un transformateur (110) ayant un enroulement primaire (110a) et un enroulement secondaire (110b), ledit enroulement primaire étant connecté à l'élément de commutation (112) de façon qu'un courant haché le traverse dans une direction; et une unité de commande (200) comprenant un premier circuit de commande (240) pour produire ladite impulsion de commande pour application à l'électrode de commande de l'élément de commutation (112) et pour commander le fonctionnement par tout ou rien de l'élément de commutation (112) dudit circuit principal; caractérisée en ce que ledit circuit de commande (240) comprend un premier moyen (107, 108) pour détecter le niveau de ladite tension continue, un second moyen (243) pour produire un signal impulsionnel à une fréquence constante à ladite seconde fréquence, un troisième moyen ($R_1$, 241, $R_5$, $R_6$, 244 et $C_2$) pour régler la durée utile dudit signal impulsionnel en réponse à la sortie dudit premier moyen (107, 108) de façon que la durée utile devienne plus importante tandis que la sortie du premier moyen baisse, et un quatrième moyen ($VR_1$) pour produire une tension variable à appliquer audit troisième moyen (241) de façon que le durée utile dudit signal impulsionnel puisse être réglée par la tension variable en plus du niveau détecté de la tension continue.

2. Alimentation en courant continu selon la revendication 1, caractérisé en ce que ledit premier circuit de commande (240) comprend de plus un cinquième moyen ($VR_3$) pour produire une tension constante prédéterminée et un moyen ($D_2$) pour appliquer la tension constante à la place de la sortie du troisième moyen lorsque la tension constante devient supérieure à la sortie du premier moyen, de façon que la durée utile du signal impulsionnel devienne constante.

3. Alimentation en courante continu selon la revendication 1, caractérisée en ce que le premier circuit de commande (240) comprend de plus un moyen (109) pour détecter un écoulement de courant tranversant le circuit principal, un moyen (242) pour produire une tension correspondant à l'écoulement détecté de courant et un moyen ($D_3$) pour appliquer la tension correspondant à l'écoulement détecté de courant à la place de la sortie du troisième moyen lorsque la tension correspondant à l'écoulement détecté de courant devient supérieure à la sortie du premier moyen, de façon que la durée utile du signal impulsionnel puisse varier selon l'écoulement de courant du circuit principal.

4. Alimentation en courant continu selon la revendication 1, caractérisé en ce que l'unité de commande (200) comprend de plus un second circuit de commande (220) comprenant un moyen (222) pour produire une tension constante prédéterminée, un moyen (221) pour comparer la tension continue détectée obtenue par le premier moyen (107, 108) à la tension constante pour produire une sortie lorsque la tension continue détectée dépasse la tension constante et un moyen formant porte (301) connecté pour recevoir les sorties du moyen de comparaison (221) et du premier circuit de commande (240), pour inhiber l'application de la sortie du premier circuit de commande à l'élément de commutation (112) en réponse à la sortie du moyen de comparaison (221).

5. Alimentation en courant continu selon la revendication 1, caractérisée en ce que l'unité de commande (200) comprend de plus un troisième circuit de commande (260) comprenant un moyen (262) pour produire un courant constant prédéterminé, un moyen (109) pour détecter un écoulement de courant passant dans le circuit principal (100), un moyen (261) pour comparer le courant détecté au courant constant prédéterminé afin de produire une sortie lorsque le courant détecté devient plus fort, en niveau, que le courant constant prédéterminé et un moyen formant porte (301) connecté pour recevoir les sorties du moyen de comparaison (261) et du premier circuit de commande (240), pour inhiber l'application de la sortie du premier circuit de commande à l'élément de commutation (112) en réponse à la sortie du moyen de comparaison (261).

6. Alimentation en courant continu selon la revendication 1, caractérisé en ce que l'unité de commande (200) comprend de plus un quatrième circuit de commande (280) comprenant un moyen (281) pour détecter une tension développée à travers l'enroulement primaire du transformateur (110) ou une tension à travers l'élément de commutation (112), un moyen (283) pour produire une tension prédéterminée, un moyen (282) pour comparer la tension détectée à la tension prédéterminée et produire une sortie lorsque l'une devient plus importante que l'autre et un moyen formant porte (301) connecté pour recevoir les sorties du moyen de comparaison (282) et du premier circuit de commande (240), pour inhiber l'application de la sortie du premier circuit de commande à l'élément de commutation (112) en réponse à la sortie de la comparaison (282).

7. Alimentation en courant continu selon l'une quelconque des revendications précédentes, caractérisée en ce que le circuit redresseur comprend un pont de diodes ayant deux ramifications, chaque ramification comprenant une diode (104 ou 105) et un thyristor (132 ou 133).

8. Alimentation en courant continu selon l'une quelconque des revendications précédentes, caractérisée en ce qu'un condensateur (106) est connecté au circuit redresseur (120, ledit condensateur ayant une valeur de capacité qui présente une faible impédance à la second fréquence.

9. Alimentation en courant continu selon l'une quelconque des revendications précédentes, caractérisée en ce que l'élément de commutation comprend un thyristor passant à l'ouverture par la gâchette (112).

10. Alimentation en courant continu selon l'une quelconque des revendications précédentes, caractérisée en ce que le transformateur (110) comprend un noyau magnétique (110c) définissant un trajet magnétique sur lequel sont enroulés l'enroulement primaire (110a) et l'enroulement secondaire (110b), ledit trajet magnétique (110c) comprenant un aimant permanent (110d) pour produire une polarisation magnétique prédéterminée par rapport au flux magnétique du fait d'une courant s'écoulant à travers l'encoulement primaire (110a).

## FIG. 1

# FIG. 2

O.S.C ~243

# FIG. 2a

# FIG. 3

# FIG. 6

FIG. 4(A)

FIG. 4(B)

FIG. 4(C)

FIG. 5